# DEMANDE DE BREVET EUROPEEN

(11) **EP 1 008 822 A1**
(43) Date de publication de la demande: **14.06.2000**
(21) Numéro de dépôt: 99460066.6
(22) Date de dépôt: 03.12.1999
(51) Int. Cl.: F25D 15/00, F25D 23/06, A22B 7/00, A01K 29/00

(54) **Bac d'éguarrissage réfrigéré**

(30) Priorité: 07.12.1998 FR 9815561
(71) Demandeur: Mantault, Pascal, 44190 ST Hilaire de Clisson (FR)
(72) Inventeur: La désignation de l'inventeur n'a pas encore été déposée

(57) **Abrégé**

Appareil pour le stockage et le refroidissement de cadavres de petits animaux issus des élevages. Cet appareil est particulièrement destiné aux éleveurs de volailles, lapins, porcs et autres animaux.

L'invention constitue en un bac d'équarrissage (6) aux parois isolées sur lequel vient se poser un couvercle (3) qui fait office de système de refroidissement.

Le couvercle est amovible et peut être relevé facilement pour permettre l'accès au bac et son dégagement.

L'évaporateur pour le refroidissement est moulé sous le couvercle contre une plaque inox pour assurer une bonne conductibilité du froid et une bonne protection de l'évaporateur.

Un système de guide pour les roues du bac permet de loger celui-ci parfaitement en place sous le couvercle.

## Description

La présente invention est destinée aux éleveurs de volailles, lapins, porcs, poissons et autres animaux de petites tailles.

Chaque jour des cadavres d'animaux sont ramassés et stockés en attendant leur récupération par une société d'équarrissage.

Selon les nouvelles normes d'hygiène, ce stockage doit être effectué à une température contrôlée négative.

Traditionnellement les éleveurs utilisent deux types de stockage :
- un ou plusieurs congélateurs ménagers ; procédé fiable pour les petits animaux mais oblige l'éleveur à vider manuellement les congélateurs au moment du passage de l'équarrisseur.
- un bac d'équarrissage placé dans une enceinte réfrigérée ; procédé pratique car les produits sont stockés directement dans le bac et peut être utilisé pour des cadavres plus grands (porcs, veaux). Mais ce système du caisson réfrigéré (chambre froide, caisse de camion isotherme, conteneur réfrigéré) oblige le refroidissement de l'ensemble du caisson. De plus, il est généralement utilisé pour le refroidissement un évaporateur ventilé très sensible aux attaques acides dues à la décomposition des produits stockés.

Le dispositif selon l'invention permet de remédier aux inconvénients de ces deux principes nommés ci-dessus.

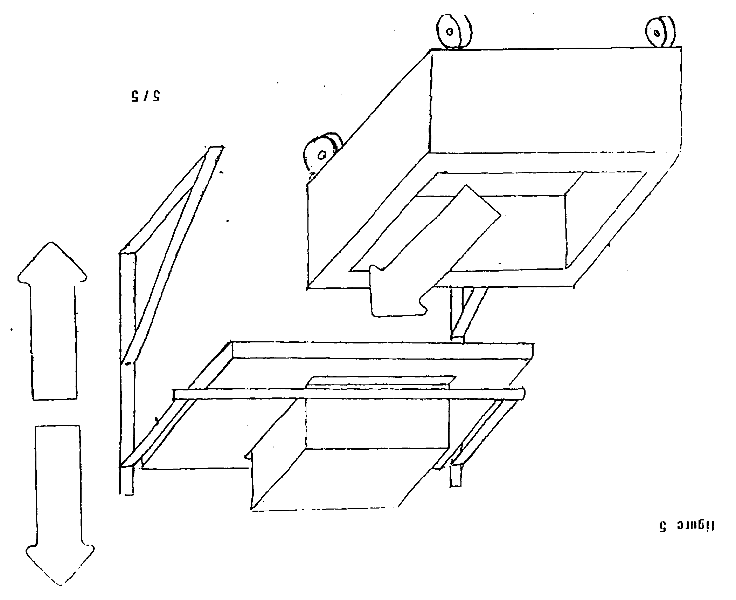

La figure 5 est un dessin d'approche pour une meilleure compréhension de l'appareil.

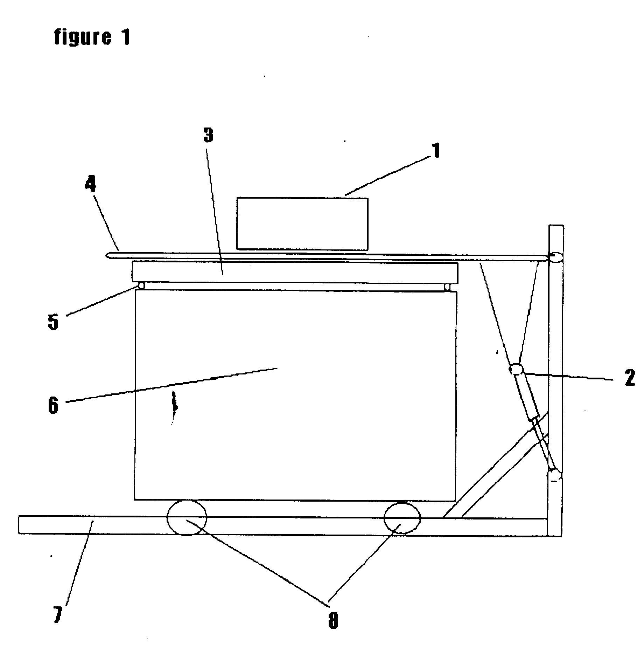

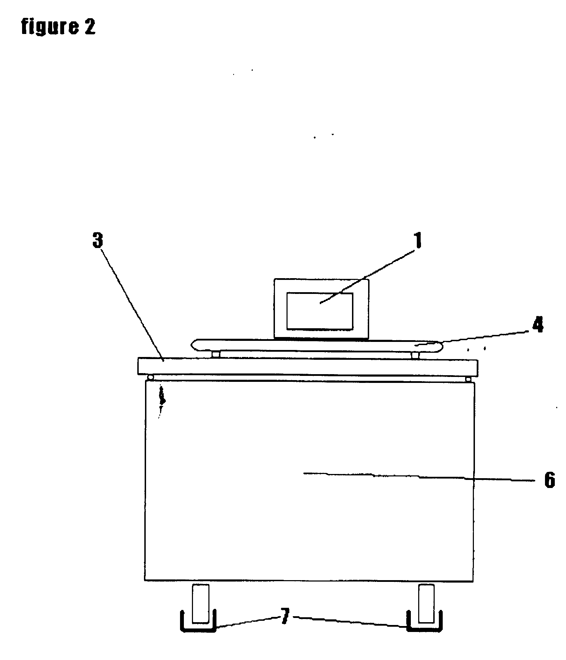

Figure 1 : croquis vu de profil - Figure 2 : croquis vu de face

Il comporte deux parties indépendantes : un bac d'équarrissage (6) dont les parois sont isolées, équipé sur le dessus d'un capot pour la réfrigération (3). Le bac (6) est d'aspect extérieur identique au bac d'équarrissage classique actuellement utilisé par les éleveurs ; il possède des roues pour le déplacement et un système de levage et basculement pour vider le bac (non représenté sur les croquis). Mais ses parois isolées permettent de faire un stockage réfrigéré directement dans le bac sans que celui-ci soit placé dans une chambre froide.

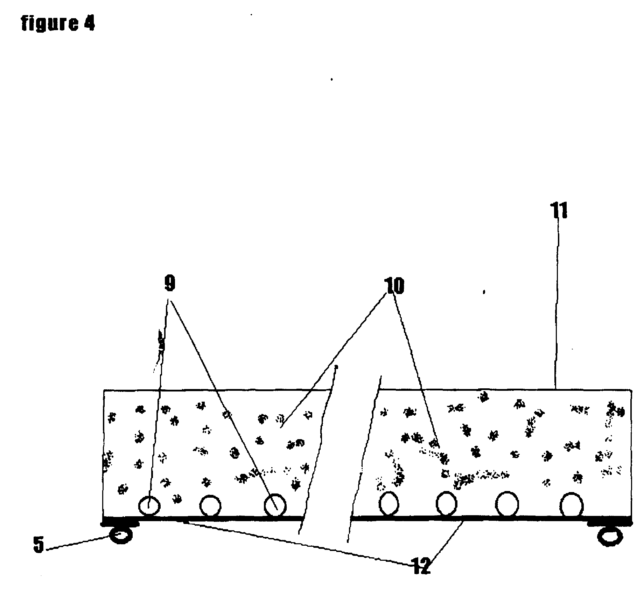

Le capot (3) assure la fonction d'étanchéité de l'ensemble et celle du refroidissement (détail figure 4). Un serpentin en cuivre (9) est placé sur la plaque inox (12) et refroidit par circulation naturelle les produits placés dans le bac. Ce capot est lui aussi isolé (10), un joint caoutchouc (5) en bordure assure une parfaite étanchéité. L'ensemble étant protégé par une paroi extérieure (11) pour permettre une utilisation en plein air.

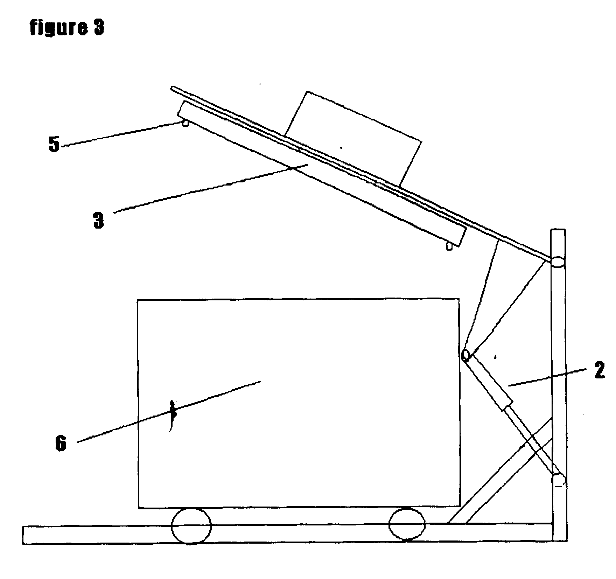

Le capot (3) sur lequel est placé le groupe frigoritique est suspendu à un châssis métallique articulé (4) pour pouvoir soulever l'ensemble et dégager ainsi le bac d'équarrissage (figure 3). Cette opération permet soit de déverser des produits dans le bac ou soit de sortir le bac lui-même.

Un système de guides dans lesquels passent les roues (7) permet de positionner parfaitement le bac (6) sous son couvercle (3). Ces guides font partie intégrantes du châssis de maintien du couvercle (figures 1 ou 3).

Le levage du couvercle est assisté par deux compas à gaz (2) calculés en fonction du poids pour permettre une manoeuvre facile et un maintien en position haute du couvercle (figure 3). Ces deux compas à gaz assurent aussi une pression parfaite du capot sur le bac, une fois l'ensemble refermé

Le châssis articulé (4) fait aussi office de poignée de levage.

le couvercle de refroidissement (détail figure 4).

Le groupe frigorifique assure le refroidissement du bac par l'intermédiaire de l'évaporateur. Celui-ci est un serpentin en tube de cuivre (9) fixé sur une plaque inox (12). Cette plaque fait office de conducteur de froid et aussi de protection efficace contre les attaques acides qui résultent des produits stockés.

La réfrigération est donc effectuée par un froid statique. Une paroi externe (11) vient coffrer le tout pour une parfaite protection de l'ensemble ; celle-ci peut-être en inox ou en polyester.

Un joint caoutchouc (5) collé contre la plaque inox (12) assure l'étanchéité entre le couvercle et le bac.

La régulation du froid se fait par thermostat type ménager.

Un système par contact électrique à balancier arrête automatiquement le groupe frigorifique au levage du capot.

Le volume de ce bac d'équarrissage est actuellement de 750 litres, mais le même procédé peut être appliqué pour un volume différent.

## Revendications

1. Appareil pour le stockage et le refroidissement de cadavres de petits animaux confortant un bac d'équarrissage aux parois isolées (6) sur lequel vient se poser un couvercle (3) pour le refroidissement des produits stockés dans le bac. Ce couvercle est amovible et peut être relevé pour permettre un accès au bac et éventuellement le retirer. L'évaporateur du couvercle est protégé par une plaque inox.

2. Dispositif selon la revendication 1 caractérisé par le fait que c'est le bac d'équarrissage (6) qui en plus d'assurer le stockage fait aussi office d'enceinte réfrigérée par ses parois isolées.

3. Dispositif selon la revendication 1 caractérisé par le fait que la réfrigération s'effectue sous l'ensemble du couvercle (3) par un évaporateur statique (figure 9) protégé par une plaque inox (12).

4. Dispositif selon la revendication 1 caractérisé par le fait que le bac et le couvercle sont deux pièces bien indépendantes. Le bac peut être retiré aisément laissant ainsi le couvercle maintenu en place par le bras de levage (4) et les vérins (2) fixés sur le châssis.

5. Dispositif selon la revendication 1 caractérisé par le fait que les roues du bac (8) se logent parfaitement dans le châssis (7) pour guider le bac en position de stockage.
